# EUROPÄISCHE PATENTSCHRIFT

(11) **EP 3 788 263 B1**
(45) Veröffentlichungstag und Bekanntmachung des Hinweises auf die Patenterteilung: **29.12.2021**
(21) Anmeldenummer: 19719291.7
(22) Anmeldetag: 24.04.2019
(51) Int. Cl.: F04D 27/02, F04D 29/42, F04D 29/46, F16K 3/03

(54) **RADIALVERDICHTER MIT IRISBLENDENMECHANISMUS**
RADIAL COMPRESSOR HAVING IRIS DIAPHRAGM MECHANISM
COMPRESSEUR RADIAL COMPRENANT UN MÉCANISME DE DIAPHRAGME IRIS

(30) Priorität: 03.05.2018 DE 102018206841
(43) Veröffentlichungstag der Anmeldung: 10.03.2021
(73) Patentinhaber: Vitesco Technologies GmbH, 93055 Regensburg (DE)
(72) Erfinder: BOGNER, Mathias, 81737 München (DE); SCHÄFER, Christoph, 81737 München (DE); SLAVIC, Sasa, 81737 München (DE)
(86) Internationale Anmeldenummer: PCT/EP2019/060482
(87) Internationale Veröffentlichungsnummer: WO 2019/211136

(56) Entgegenhaltungen:
- EP-A1- 3 236 077
- WO-A1-2019/052731
- US-A1- 2009 095 350
- US-A1- 2017 320 470

## Beschreibung

Die vorliegende Erfindung betrifft einen Radialverdichter für eine Aufladevorrichtung eines Verbrennungsmotors mit einem in einem Verdichtergehäuse angeordneten Verdichterrad, einem Frischluftzufuhrkanal zum Leiten eines Frischluftmassenstroms auf das Verdichterrad und einem stromauf vor dem Verdichterrad im Frischluftzuführkanal angeordneten Irisblendenmechanismus, der eine Vielzahl von Lamellen zum Öffnen und Schließen einer Blendenöffnung aufweist, um einen Strömungsquerschnitt für den Frischluftmassenstrom variabel einzustellen, gemäß dem Oberbegriff von Patentanspruch 1.

Ein derartiger Radialverdichter ist aus der EP 3 236 077 A1 bekannt. Dieser Radialverdichter zeichnet sich dadurch aus, dass der Irisblendenmechanismus mehrere Lamellen aufweist, wobei jede Lamelle von einem Betätigungselement bewegt wird.

Ferner ist aus der US 2009/0095350 A1 eine Betätigungseinrichtung für ein Lufteinlassventil bekannt. Diese Betätigungseinrichtung weist einen Blendenmechanismus auf, bei dem jeweils zwei Lamellen in zwei benachbarten parallelen Ebenen angeordnet sind. Der Blendenmechanismus funktioniert dabei so, dass eine äußere Lamelle der einen Ebene gleichzeitig zwei innere Lamellen der anderen Ebene bewegt, und dass diese beiden inneren Lamellen der anderen Ebene gemeinsam eine weitere äußere Lamelle der einen Ebene bewegen. Die beiden Lamellenpaare der beiden Ebenen bewegen daher mehrere Lamellen gleichzeitig bzw. werden gleichzeitig von mehreren Lamellen bewegt.

Die vorliegende Erfindung betrifft ein neuartiges Konzept zum Bewegen der einzelnen Lamellen zum Öffnen und zum Schließen der entsprechenden Blendenöffnung. Es ist im Stand der Technik bekannt, die Lamellen zum Öffnen und Schließen der Blendenöffnung mit Hilfe einer Betätigungseinrichtung zu bewegen, die einen Betätigungshebel und einen Verstellring mit zwei Fingern aufweist. Der Betätigungshebel ist zwischen dem Verstellring mit den beiden Fingern angeordnet. Wenn sich der Hebel dreht, wird der Verstellring gedreht. Auf der Unterseite des Verstellringes sind Nuten angeordnet, die jede Lamelle des Irisblendenmechanismus führen. Dabei entspricht die Zahl der Nuten der Zahl der Lamellen. Jede Lamelle hat zwei Zapfen, wobei einer im Verdichtergehäuse fixiert ist und der andere in einer Nut des Verstellringes geführt ist. Um eine Lamelle zu drehen, muss daher das Betätigungselement den Verstellring drehen, der sämtliche Lamellen zum Öffnen oder Schließen der Blendenöffnung dreht.

Der vorliegenden Erfindung liegt die Aufgabe zugrunde, einen Radialverdichter der vorstehend beschriebenen Art zur Verfügung zu stellen, bei dem der Irisblendenmechanismus einen besonders einfachen Aufbau aufweist.

Diese Aufgabe wird erfindungsgemäß bei einem Radialverdichter der angegebenen Art durch die kennzeichnenden Merkmale von Patentanspruch 1 gelöst.

Die Erfindung schlägt somit ein Konzept eines Irisblendenmechanismus vor, das selbstführende Lamellen aufweist. Ein Betätigungselement greift daher nicht mehr sämtliche Lamellen (über einen Verstellring) an, sondern auf direkte Weise nur noch eine Hauptlamelle, während die anderen Lamellen von dieser Hauptlamelle zum Öffnen oder Schließen der Blendenöffnung angetrieben bzw. bewegt werden. Hierdurch ergibt sich eine Reihe von Vorteilen:
Die Kinematik ist sehr einfach, da das vorgesehene Betätigungselement nur eine einzige Lamelle direkt antreibt. Es muss kein zusätzliches Axial- und Radiallager vorgesehen werden. Es ist nur eine minimale Anzahl von sich bewegenden Teilen erforderlich, wobei sich nur diejenigen Teile bewegen, die bewegt werden müssen. In Axialrichtung wird nur ein geringer Raum benötigt.

Ferner ist nur eine einfache Abdichtung erforderlich.

Der Mechanismus kann über ein linear oder rotatorisch wirkendes Betätigungselement betrieben werden. Hierzu wird nur eine niedrige Antriebskraft benötigt.

Insgesamt ergibt sich eine einfache Konstruktion, eine einfache Montage und ein geringer Kostenaufwand.

Bei der erfindungsgemäßen Lösung greift das vorgesehene Betätigungselement nur eine einzige Lamelle, nämlich die Hauptlamelle, an. Diese gibt die Bewegung an die nächste geführte Lamelle weiter, die entsprechend drehbar gelagert ist, aber nicht direkt mit dem Betätigungselement in Verbindung steht. Die erste geführte Lamelle gibt dann ihre Bewegung an die zweite geführte Lamelle weiter etc., bis der Kreis geschlossen ist und die letzte geführte Lamelle wieder die Hauptlamelle beaufschlagt. Alle Lamellen sind mit einer Führungsnut versehen, in die ein Führungselement der jeweils benachbarten Lamelle zum Verstellen der Folgelamelle eingreift. Das Führungselement wird hierbei in der Führungsnut bis zum Ende derselben (Anschlag) bewegt und bewirkt somit die Bewegung der Folgelamelle etc.

Bei der Bewegung in eine Richtung wird die Blendenöffnung auf diese Weise zunehmend geschlossen, während sie bei einer Bewegung in der entgegengesetzten Richtung zunehmend geöffnet wird.

In Weiterbildung der Erfindung besitzt die Hauptlamelle eine Hauptausnehmung, mit der ein linear oder rotatorisch wirkender Betätigungsstift als Betätigungselement zusammenwirkt. Mit einer solchen linearen oder rotatorischen Bewegung des Betätigungsstiftes wird das Öffnen oder Schließen des Irisblendenmechanismus initiiert, wobei, wie vorstehend erläutert, die Hauptlamelle ihre Bewegung auf die geführten Lamellen zum Öffnen oder Schließen überträgt.

Was die Kopplung der Lamellen untereinander anbetrifft, so ist diese über ein in eine Führungsnut der Folgelamelle eingreifendes Führungselement realisiert. Dieses Führungselement ist vorzugsweise als in die Führungsnut der Folgelamelle eingreifender und in der Führungsnut beweglicher Zapfen ausgebildet.

Ferner besitzen alle Lamellen vorzugsweise einen am Verdichtergehäuse oder einem anderen festen Bauteil drehbar gelagerten Lagerzapfen. Zum Öffnen oder Schließen führen daher die Lamellen im Wesentlichen eine Schwenkbewegung um den jeweiligen Lagerzapfen durch.

Die erfindungsgemäße Lösung zeichnet sich durch eine besonders einfache Konstruktion aus. So sind vorzugsweise die geführten Lamellen, abgesehen von der Hauptausnehmung, mit der Hauptlamelle identisch ausgebildet.

Alle Lamellen besitzen vorzugsweise etwa die Form eines halben Kreisringes.

Speziell sind das Führungselement und der Lagerzapfen einer Lamelle in deren Endbereichen angeordnet, wobei die Führungsnut vorzugsweise im Lamellenabschnitt benachbart zum Lagerzapfen angeordnet ist. Das bedeutet, dass die Lamellen in einem Endbereich schwenkbar gelagert sind, während sie mit dem im anderen Endbereich angeordneten Führungselement die Bewegung auf die jeweilige Folgelamelle übertragen, wobei dieses Führungselement wiederum in die in der benachbarten Lamelle angeordnete Führungsnut eingreift.

Die vorliegende Erfindung betrifft ferner eine Lamelle für einen Irisblendenmechanismus eines Radialverdichters der vorstehend beschriebenen Art. Die Lamelle besitzt etwa die Form eines halben Kreisringes und weist eine Führungsnut, ein Führungselement und ein Lagerelement auf. Dieser Aufbau entspricht den vorstehend beschriebenen geführten Lamellen, während die Hauptlamelle noch zusätzlich eine Einrichtung aufweist, die eine Verbindung mit dem vorgesehenen Betätigungselement des Irisblendenmechanismus herstellt. Bei dieser Einrichtung kann es sich um eine Hauptausnehmung handeln, in die ein linear oder rotatorisch wirkender Betätigungsstift eingreift.

Vorzugsweise sind das Führungselement und das Lagerelement der Lamellen in den Endbereichen derselben angeordnet. Hierbei befindet sich die Führungsnut vorzugsweise im Lamellenabschnitt benachbart zum Lagerzapfen.

Des Weiteren betrifft die vorliegende Erfindung eine Aufladevorrichtung für einen Verbrennungsmotor, die mit einem Radialverdichter der vorstehend beschriebenen Art versehen ist. Die Aufladevorrichtung kann hierbei beispielsweise als Abgasturbolader oder als ein elektromotorisch betriebener Lader oder als ein über eine mechanische Kopplung mit dem Verbrennungsmotor betriebener Lader ausgebildet sein.

Der hier beschriebene Irisblendenmechanismus kann eine Vielzahl von Lamellen aufweisen, bei denen es sich um eine Hauptlamelle und um mindestens zwei geführte Lamellen handeln kann.

Die Erfindung wird nachfolgend anhand eines Ausführungsbeispiels in Verbindung mit der Zeichnung im Einzelnen erläutert. Es zeigen:
- Figur 1: eine Vorderansicht und eine Rückansicht einer Hauptlamelle eines Irisblendenmechanismus;
- Figur 2: eine Vorderansicht und eine Rückansicht einer geführten Lamelle eines Irisblendenmechanismus;
- Figur 3: eine schematische Ansicht der Lamellen eines Irisblendenmechanismus im aneinandergesetzten Zustand mit Betätigungselement, wobei zwei unterschiedliche Stellungen dargestellt sind; und
- Figur 4: eine Ansicht wie Figur 3 mit Darstellung der in die Führungsnuten eingreifenden Führungszapfen.

In Verbindung mit dem nachfolgend erläuterten Ausführungsbeispiel wird nur die Konstruktion des Irisblendenmechanismus mit den einzelnen Lamellen im Detail beschrieben. Die Gesamtkonstruktion des Radialverdichters wird hier nicht mehr erläutert. Diese kann beispielsweise so ausgebildet sein, wie dies in dem einleitend genannten Dokument zum Stand der Technik dargestellt ist.

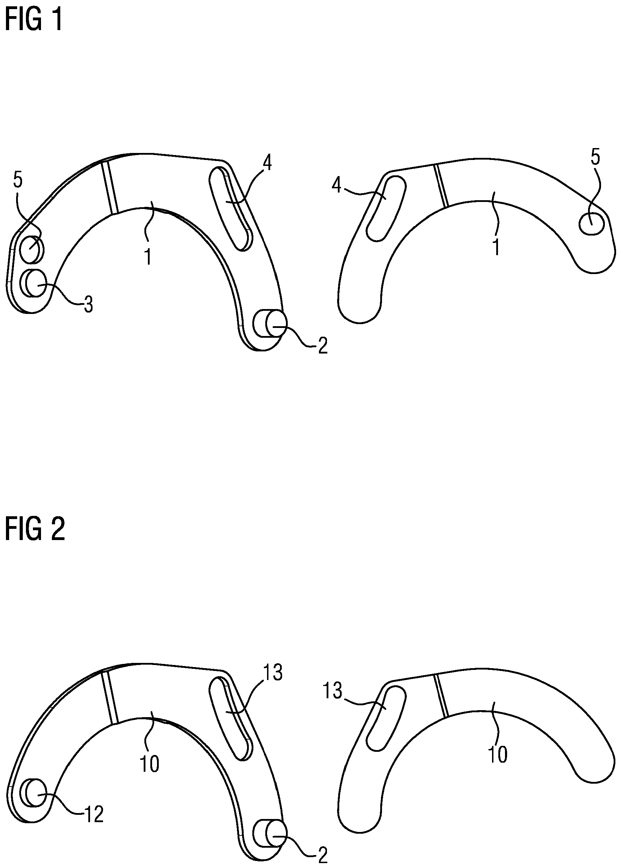

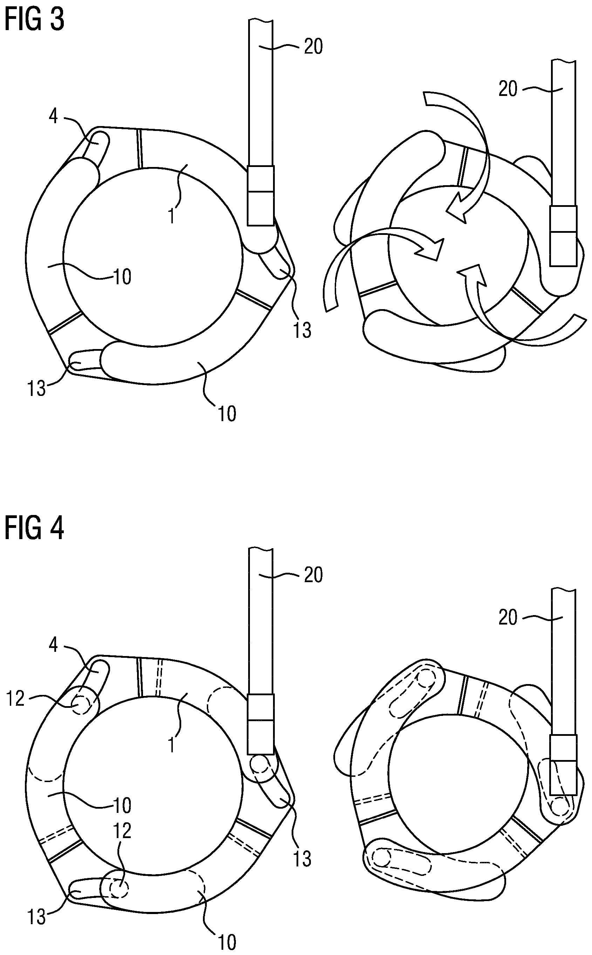

Stromauf vor dem Verdichterrad des Radialverdichters ist im Frischluftzuführkanal ein Irisblendenmechanismus angeordnet, der in der Ansicht schematisch in den Figuren 3 und 4 dargestellt ist und eine Vielzahl von in den Figuren 1 und 2 schematisch dargestellten Lamellen umfasst. Bei dem hier dargestellten Ausführungsbeispiel wirkt eine Hauptlamelle 1 mit zwei geführten Lamellen 10 zusammen. Die Hauptlamelle 1 ist in der linken Ansicht der Figur 1 in einer Rückansicht und in der rechten Ansicht der Figur 1 in einer Vorderansicht dargestellt. Eine geführte Lamelle ist in Figur 2 links in der Rückansicht und rechts in der Vorderansicht gezeigt.

Insgesamt besitzt der Irisblendenmechanismus daher drei Lamellen. Er wird über einen linear wirkenden Betätigungsstift 20 eines nicht dargestellten Betätigungsmechanismus betätigt, um die entsprechende Blendenöffnung des Mechanismus zumindest teilweise zu öffnen oder zu schließen. In Figur 3 ist links eine geöffnete Stellung und rechts eine teilweise geschlossene Stellung des Mechanismus dargestellt.

Der Betätigungsstift 20 greift in eine Hauptausnehmung 5 der in Figur 1 gezeigten Hauptlamelle 1 ein und bewirkt bei einer Linearbewegung ein Verschwenken der Hauptlamelle 1 um einen Lagerzapfen 2. Durch diese Schwenkbewegung bewegt sich ein Führungszapfen 3 der Hauptlamelle 1 in einer Führungsnut 13 der Folgelamelle 10 bis zum Rand der Führungsnut 13 und verschwenkt auf diese Weise die Folgelamelle, welche wiederum mit einem Führungszapfen 12 in eine Führungsnut 13 einer weiteren Folgelamelle 10 eingreift und auch diese verschwenkt. Schließlich wirkt hierbei der Führungszapfen 12 der zweiten Folgelamelle.

Diese Lamelle ist über einen Lagerzapfen 2 bzw. 11 am Verdichtergehäuse drehbar bzw. schwenkbar gelagert. Es lässt sich daher zusammenfassen, dass bei der hier beschriebenen Lösung nur die Hauptlamelle 1 über das Betätigungselement 20 direkt angetrieben wird, während die weiteren Lamellen lediglich durch die Bewegung der vorhergehenden Lamelle bewegt werden. Dieses Konzept stellt daher eine Abkehr von dem bekannten Konzept einer Bewegung des Irisblendenmechanismus über einen Verstellring dar, der mit jeder Lamelle direkt verbunden ist und an dieser angreift.

## Patentansprüche

1. Radialverdichter für eine Aufladevorrichtung eines Verbrennungsmotors mit einem in einem Verdichtergehäuse angeordneten Verdichterrad, einem Frischluftzuführkanal zum Leiten eines Frischluftmassenstroms auf das Verdichterrad und einem stromauf vor dem Verdichterrad im Frischluftzuführkanal angeordneten Irisblendenmechanismus, der eine Vielzahl von Lamellen zum Öffnen und Schließen einer Blendenöffnung aufweist, um einen Strömungsquerschnitt für den Frischluftmassenstrom variabel einzustellen, wobei
die Lamellen (1,10) eine von einem Betätigungselement (20) zur Verstellung betätigte Hauptlamelle (1) und von dieser zur Verstellung geführte Lamellen (10) umfassen, wobei
alle Lamellen (1, 10) am Verdichtergehäuse oder einem anderen festen Bauteil drehbar gelagert sind, **dadurch gekennzeichnet, dass**
alle geführten Lamellen (10) jeweils lediglich durch die Bewegung der vorhergehenden Lamelle (1,10) bewegt werden und lediglich die jeweils nachfolgende Lamelle bewegen, und dass
alle Lamellen (1,10) eine Führungsnut (4,13) besitzen, in die ein Führungselement (3,12) der jeweils benachbarten Lamelle zum Verstellen der Folgelamelle eingreift.

2. Radialverdichter nach Anspruch 1, **dadurch gekennzeichnet, dass** die Hauptlamelle (1) eine Hauptausnehmung (5) aufweist, mit der ein linear oder rotatorisch wirkender Betätigungsstift als Betätigungselement (20) zusammenwirkt.

3. Radialverdichter nach Anspruch 1 oder 2, **dadurch gekennzeichnet, dass** das Führungselement (3,12) als in die Führungsnut (4,13) der Folgelamelle eingreifender und in der Führungsnut (4, 13) beweglicher Zapfen ausgebildet ist.

4. Radialverdichter nach einem der vorangehenden Ansprüche, **dadurch gekennzeichnet, dass** alle Lamellen (1,10) einen am Verdichtergehäuse oder einem anderen festen Bauteil drehbar gelagerten Lagerzapfen (2,11) besitzen.

5. Radialverdichter nach einem der vorangehenden Ansprüche, **dadurch gekennzeichnet, dass** die geführten Lamellen (10), abgesehen von der Hauptausnehmung (5), mit der Hauptlamelle (1) identisch ausgebildet sind.

6. Radialverdichter nach einem der vorangehenden Ansprüche, **dadurch gekennzeichnet, dass** alle Lamellen (1,10) etwa die Form eines halben Kreisringes besitzen.

7. Radialverdichter nach einem der vorangehenden Ansprüche, **dadurch gekennzeichnet, dass** das Führungselement (3,12) und der Lagerzapfen (2,11) einer Lamelle (1,10) in deren Endbereichen angeordnet sind.

8. Aufladevorrichtung für einen Verbrennungsmotor mit einem Radialverdichter nach einem der Ansprüche 1 bis 7.

## Claims

1. Radial compressor for a supercharging device of an internal combustion engine, having a compressor wheel arranged in a compressor housing, having a fresh air feed duct for guiding a fresh air mass flow to the compressor wheel, and having an iris diaphragm mechanism which is arranged upstream of the compressor wheel in the fresh air feed duct and which has a multiplicity of blades for opening and closing an diaphragm orifice in order to variably set a flow cross section for the fresh air mass flow, wherein
the blades (1, 10) comprise a main blade (1), which is actuated for adjustment by an actuating element (20), and blades (10) guided for adjustment by said main blade (1), wherein
all the blades (1, 10) are rotatably mounted on the compressor housing or on some other fixed component,
**characterized in that**
all the guided blades (10) are moved in each case only by the movement of the preceding blade (1, 10) and move only the respectively following blade,
and **in that**
all the blades (1, 10) have a guide slot (4, 13), in which a guide element (3, 12) of the respectively adjacent blade engages for adjustment of the following blade.

2. Radial compressor according to Claim 1, **characterized in that** the main blade (1) has a main aperture (5), with which an actuating pin that acts linearly or in a rotary manner interacts as the actuating element (20).

3. Radial compressor according to Claim 1 or 2, **characterized in that** the guide element (3, 12) is designed as a journal that engages in the guide slot (4, 13) of the following blade and is movable in the guide slot (4, 13).

4. Radial compressor according to any of the preceding claims, **characterized in that** all the blades (1, 10) have a bearing journal (2, 11) rotatably mounted on the compressor housing or on some other fixed component.

5. Radial compressor according to any of the preceding claims, **characterized in that**, apart from the main aperture (5), the guided blades (10) are of identical design to the main blade (1).

6. Radial compressor according to any of the preceding claims, **characterized in that** all the blades (1, 10) have approximately the shape of a semicircular ring.

7. Radial compressor according to any of the preceding claims, **characterized in that** the guide element (3, 12) and the bearing journal (2, 11) of a blade (1, 10) are arranged in the end regions of said blade (1, 10).

8. Supercharging device for an internal combustion engine having a radial compressor according to any of Claims 1 to 7.

## Revendications

1. Compresseur radial pour un dispositif de chargement d'un moteur à combustion, comprenant une roue de compresseur agencée dans un boîtier de compresseur, un canal d'alimentation en air frais pour diriger un flux massique d'air frais sur la roue de compresseur, et un mécanisme de diaphragme à iris agencé en amont de la roue de compresseur dans le canal d'alimentation en air frais, qui comprend une pluralité de lamelles pour l'ouverture et la fermeture d'une ouverture de diaphragme, afin d'ajuster de manière variable une section transversale d'écoulement pour le flux massique d'air frais,
les lamelles (1, 10) comprenant une lamelle principale (1) actionnée par un élément d'actionnement (20) pour le réglage et des lamelles (10) guidées par celle-ci pour le réglage,
toutes les lamelles (1, 10) étant montées de manière rotative sur le boîtier de compresseur ou un autre composant fixe,
**caractérisé en ce que**
toutes les lamelles guidées (10) peuvent chacune uniquement être déplacées par le déplacement des lamelles précédentes (1, 10) et déplacent uniquement la lamelle ultérieure respective,
et **en ce que**
toutes les lamelles (1, 10) possèdent une rainure de guidage (4, 13), dans laquelle un élément de guidage (3, 12) de la lamelle voisine respective pénètre pour le réglage de la lamelle suiveuse.

2. Compresseur radial selon la revendication 1, **caractérisé en ce que** la lamelle principale (1) comprend un évidement principal (5), avec lequel une goupille d'actionnement à action linéaire ou rotative coopère en tant qu'élément d'actionnement (20).

3. Compresseur radial selon la revendication 1 ou 2, **caractérisé en ce que** l'élément de guidage (3, 12) est configuré sous la forme d'un tenon pénétrant dans la rainure de guidage (4, 13) de la lamelle suiveuse et mobile dans la rainure de guidage (4, 13).

4. Compresseur radial selon l'une quelconque des revendications précédentes, **caractérisé en ce que** toutes les lamelles (1, 10) possèdent un tourillon (2, 11) monté de manière rotative sur le boîtier de compresseur ou un autre composant fixe.

5. Compresseur radial selon l'une quelconque des revendications précédentes, **caractérisé en ce que** les lamelles guidées (10) sont configurées de manière identique à la lamelle principale (1), à l'exception de l'évidement principal (5).

6. Compresseur radial selon l'une quelconque des revendications précédentes, **caractérisé en ce que** toutes les lamelles (1, 10) possèdent approximativement la forme d'un demi-anneau circulaire.

7. Compresseur radial selon l'une quelconque des revendications précédentes, **caractérisé en ce que** l'élément de guidage (3, 12) et le tourillon (2, 11) d'une lamelle (1, 10) sont agencés dans ses zones d'extrémité.

8. Dispositif de chargement pour un moteur à combustion, muni d'un compresseur radial selon l'une quelconque des revendications 1 à 7.
